# EUROPÄISCHE PATENTSCHRIFT

(11) **EP 2 163 435 B1**
(45) Veröffentlichungstag und Bekanntmachung des Hinweises auf die Patenterteilung: **28.09.2011**
(21) Anmeldenummer: 09180997.0
(22) Anmeldetag: 10.07.2007
(51) Int. Cl.: B60R 21/013

(54) **Verfahren und Vorrichtung zur Übertragung über einen Fahrzeugdatenbus einer Ansteuerungsentscheidung von einem Steuergerät zu einem Aktuatorik**
Method and device for transmitting over a vehicle data bus a decision command from a controller to an actuator
Méthode et dispositif pour transmettre sur un réseau électrique de données un ordre decisif d'un contrôleur électronique à un actionneur électrique

(30) Priorität: 24.08.2006 DE 102006039709
(43) Veröffentlichungstag der Anmeldung: 17.03.2010
(62) Teilanmeldung aus: 07787296.8
(73) Patentinhaber: Robert Bosch GmbH, 70442 Stuttgart (DE)
(72) Erfinder: Schmid, Michael, 70806 Kornwestheim (DE); Denz, Holger, 70839 Gerlingen (DE)

(56) Entgegenhaltungen:
- WO-A-2006/081902
- DE-A1- 10 233 575
- DE-A1- 19 740 021
- US-A- 5 964 816

## Beschreibung

### Stand der Technik

Die Erfindung betrifft ein Verfahren zur Übertragung einer Ansteuerungsentscheidung für eine Aktuatorik von einem ersten Steuergerät zu mindestens einem zweiten Steuergerät und eine Vorrichtung zur Übertragung von einer Ansteuerungsentscheidung für eine Aktuatorik von einem ersten zu mindestens einem zweiten Steuergerät nach der Gattung der unabhängigen Patentansprüche.

Aus EP 866 971 B1 ist bereits eine Kurzsignalübertragung zwischen zwei Auswerteeinheiten bekannt. Dabei werden Daten bezüglich ausgefallener Bauteile und ausgefallener Funktionen über die Leitung ausgetauscht.

Aus US 5,964,816 ist gemäß Oberbegriff des Anspruchs 1 ein verteiltes Rückhaltesystem bekannt, bei dem Sensoren oder ein zentraler Controller ein Zündgerät durch drei Nachrichten, die verschiedene Eskalationsstufen anzeigen, zur Ansteuerung der Personenschutzmittel zu veranlassen.

### Offenbarung der Erfindung

Das erfindungsgemäße Verfahren zur Übertragung für eine Ansteuerungsentscheidung für eine Aktuatorik von einem ersten Steuergerät zu mindestens einem zweiten Steuergerät bzw. die die Vorrichtung zur Übertragung von einer Ansteuerungsentscheidung für eine Aktuatorik von einem ersten zu mindestens einem zweiten Steuergerät haben demgegenüber den Vorteil, dass eine Ansteuerungsentscheidung übertragen wird und diese Übertragung dadurch besonders sicher wird, dass die Ansteuerung der Aktuatorik in Abhängigkeit von mindestens zwei Nachrichten vom ersten Steuergerät erfolgt. D. h. die Datenübertragung besteht aus wenigstens zwei Nachrichten vom ersten Steuergerät zum mindestens zweiten Steuergerät. Dies führt zu einer besonders sicheren und zuverlässigen Datenübertragung bei einer solch wichtigen Nachricht, die möglichst störsicher übertragen werden muss. Damit ist es möglich, das eine Auswertung, die im ersten Steuergerät erfolgt und zu einer Ansteuerungsentscheidung für das zweite Steuergerät führt, damit diese Ansteuerungsentscheidung problemlos übertragen werden kann. Insbesondere ist es nicht notwendig, dass das zweite Steuergerät eine eigene Auswertung durchführt. Die Ansteuerung kann natürlich auch noch zusätzlich in Abhängigkeit von weiteren Parametern erfolgen, die im zweiten Steuergerät ausgewertet werden.

Erfindungsgemäß ist das erste Steuergerät ein Steuergerät zur Ansteuerung von Personschutzmitteln und das zweite Steuergerät zur Betätigung einer Fahrdynamikregelung bzw. eines Bremssystems. Im Zuge einer Zusammenführung von solchen Sicherheitsfunktionen ist es in einer Crashphase hilfreich, zusätzlich die Funktion der Fahrdynamikregelung bzw. des Bremssystems zu aktivieren, um die Folgen des Unfalls zu minimieren. Durch die erfindungsgemäße Lösung wird vermieden, dass fälschlicherweise eine Aktivierung erfolgt.

Durch die in den abhängigen Ansprüchen aufgeführten Maßnahmen und Weiterbildungen sind vorteilhafte Verbesserungen der in den unabhängigen Patentansprüchen angegebenen Vorrichtung bzw. des in den unabhängigen Patentansprüchen angegebene Verfahrens bzw. der in den unabhängigen Patentansprüchen angegebenen Steuergeräten möglich.

Vorteilhafter Weise wird das zweite Steuergerät durch die erste Nachricht in einen aktiven Zustand versetzt und erst die zweite Nachricht bewirkt dann die Ansteuerung der Aktuatorik durch das zweite Steuergerät, sofern das Steuergerät im aktiven Zustand ist. Dieser aktive Zustand hält nicht unbegrenzt an, sondern nur für eine vorgegebene Zeitdauer, beispielsweise 20ms. Danach ist, wenn die zweite Nachricht bis dahin noch gekommen ist, wird das zweite Steuergerät wieder in den inaktiven Zustand zurückversetzt.

Alternativ ist es möglich, dass die Ansteuerung nur dann erfolgt, wenn das zweite Steuergerät mindestens zwei Nachrichten empfängt, wobei die zweite Nachricht oder ein Informationsanteil der zweiten Nachricht in Abhängigkeit von einer dritten Nachricht vom zweiten Steuergerät zum ersten Steuergerät erzeugt wurde. D. h. nachdem das zweite Steuergerät die erste Nachricht erhalten hat, wird eine Anforderung an das erste Steuergerät geschickt, eine Bestätigung dafür in der zweiten Nachricht zu geben, so dass der Empfang der dritten Nachricht nachgewiesen werden kann. Dafür schickt dann das erste Steuergerät seine zweite Nachricht. Damit gelingt die Absicherung der Übertragung der Ansteuerungsentscheidung durch dieses Frage-Antwort-Verhalten.

Ausführungsbeispiele der Erfindung sind in der Zeichnung dargestellt und werden in der nachfolgenden Beschreibung näher erläutert.

Es zeigen
Figur 1 ein Blockschaltbild der erfindungsgemäßen Vorrichtung mit den erfindungsgemäßen Steuergeräten,
Figur 2 ein erstes Ausführungsbeispiel der Datenübertragung,
Figur 3 ein zweites erfindungsgemäßes Ausführungsbeispiel der Datenübertragung,
Figur 4 ein erstes Flussdiagramm und Figur 5 ein zweites erfindungsgemäßes Flussdiagramm.

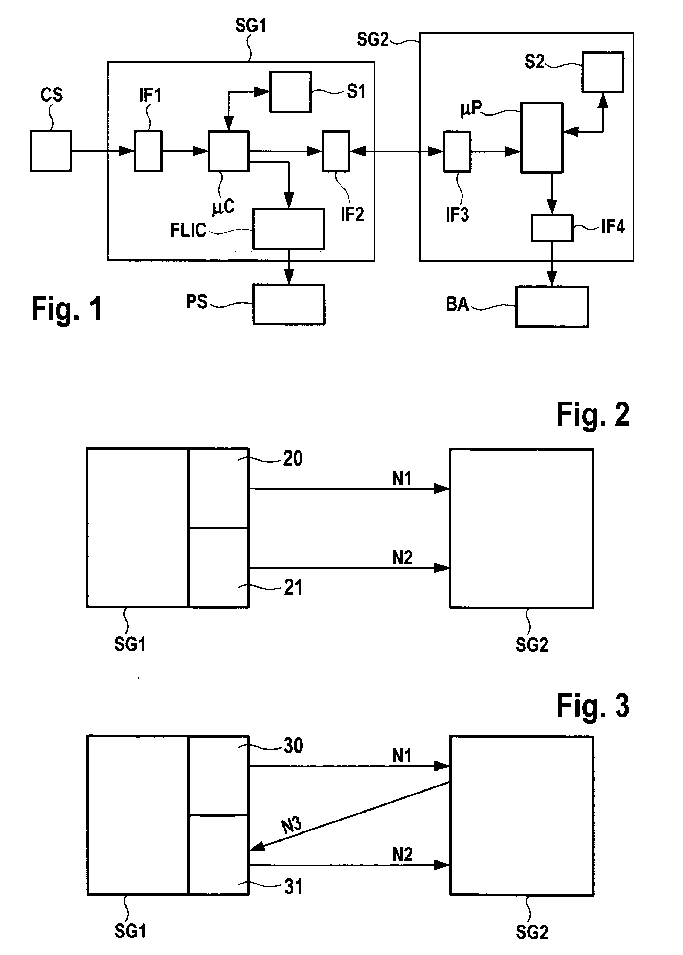

Figur 1 erläutert den Aufbau der erfindungsgemäßen Vorrichtung bzw. der erfindungsgemäßen Steuergeräte, soweit er für das Verständnis der Erfindung notwendig ist. D. h. für den Betrieb notwendige aber für das Verständnis der Erfindung nicht notwendige Bauelemente sind der Einfachheit halber vorliegend weggelassen worden. Ein erstes Steuergerät SG1 weist als zentrales Element einen Mikrocontroller µC auf, der als Auswerteschaltung dient. Der Mikrocontroller µC, der auch durch andere Prozessortypen oder ASICs oder diskret aufgebaute Auswerteschaltungen ersetzt werden kann, ist über einen Datenein- ausgang mit einem zugeordneten Speicher S1 verbunden, der eine dauerhafte bzw. flüchtige Speicherung von Daten ermöglicht.

Der Mikrocontroller µC erhält über eine Schnittstelle IF1 Daten von einer ausgelagerten Crashsensorik CS. Zusätzlich kann auch eine Crashsensorik innerhalb des Steuergeräts SG1 vorhanden sein. Auch eine Umfeldsensorik, bzw. eine Sensorik zur Erfassung des Insassen kann vorhanden sein.

Die Crashsensorik CS weist Beschleunigungssensoren an der Fahrzeugfront und an den Fahrzeugseiten auf und kann zusätzlich Drucksensoren im Bereich der Seitenteile des Fahrzeugs aufweisen, um einen Seitenaufprall möglichst schnell zu erfassen. Auch eine Körperschallsensorik kann als Crashsensorik CS verwendet werden. Auch andere Kontaktsensoren sind möglich. Als Umfeldsensoren können neben einer Radar- und Ultraschallsensorik auch eine Videosensorik oder eine Lidarsensorik oder ein Photonic Mixing Device verwendet werden.

Die Beschleunigungssensorik und die Drucksensorik sind üblicherweise mikromechanisch aufgebaut. D. h. Druckänderungen und Beschleunigungen drücken sich in einer Bewegung eines mikromechanisch hergestellten Elements aus, die oft sich dann in einer Kapazitätsänderung ausdrückt. Diese Kapazitätsänderung wird in eine Spannung umgewandelt, die letztlich digitalisiert wird und so als Datum an die Schnittstelle IF1 im Steuergerät SG1 übertragen werden kann.

Die Übertragung zwischen der Schnittstelle IF1 und dem Mikrocontroller µC geschieht üblicherweise über den Serial Peripherial Interface Bus, kurz SPI genant. In Abhängigkeit von diesen Sensordaten ermittelt der Mikrocontroller µC mittels eines Ansteuerungsalgorithmus, den er aus dem Speicher S1 lädt, ob eine Ansteuerung der Personenschutzmittel PS und/oder der Ansteuerung der Bremsen erfolgen soll. Die Ansteuerung der Personenschutzmittel erfolgt über eine Ansteuerungsentscheidung, die der Mikrocontroller µC zu einer Zündkreisschaltung FLIC überträgt, wobei die Zündkreisschaltung FLIC vorzugsweise eine Bestromung der Personenschutzmittel wie Airbags oder Gurtstraffer bewirkt, so dass damit ein jeweiliges Zündelement gezündet werden kann.

Die Ansteuerungsentscheidung wird jedoch hier zusätzlich über eine weitere Schnittstelle IF2 vom Mikrocontroller µC zu einem Steuergerät SG2 in der Form von wenigstens zwei Nachrichten übertragen, so dass das Steuergerät SG2 eine Bremsenansteuerung BA entsprechend ansteuern kann. Die Schnittstelle IF2 kann ein CAN-Controller sein, ebenso dann die Schnittstelle IF3, so dass ein CAN-Bus die Verbindung zwischen den beiden Steuergeräten SG1 und SG2 herstellt. Es sind jedoch auch andere Datenübertragungsmethoden möglich wie eine Punkt-zu-Punkt-Verbindung oder andere Bussysteme. Die Schnittstelle IF3 im Steuergerät SG2 leitet die Nachrichten an den Mikroprozessor µP im Steuergerät SG2 weiter. Anstatt eines Mikroprozessors µP ist es auch möglich, ebenfalls einen Mikrocontroller oder andere Auswerteschaltungen zu verwenden. Auch der Mikrocontroller µP nutzt einen Speicher S2, um Daten dauerhaft oder flüchtig zu speichern bzw. aus dem dauerhaften Speicher zu laden. Der Mikroprozessor µP steuert, wenn die mindestens zwei Nachrichten vom Steuergerät SG1 beim Steuergerät SG2 angelangt sind, über die Schnittstelle IF4 die Bremsenansteuerung BA entsprechend an.

Diese Ansteuerungsentscheidung vom Steuergerät SG1 kann auch an mehrere Steuergeräte übertragen werden. Das Steuergerät SG2 kann neben dieser Ansteuerungsentscheidung, aber auch andere selbst ausgewertete Daten verwenden, um zu entscheiden, ob und wie die entsprechende Akutatorik, hier die Bremsenansteuerung BA, angesteuert werden soll.

Figur 2 erläutert in einem ersten Ausführungsbeispiel eine mögliche Übertragung der Ansteuerungsentscheidung mit mindestens zwei Nachrichten. Am Steuergerät SG1 wird aus einem Block 20, der hier ein Software-Element ist, eine Nachricht N1 übertragen, die das Steuergerät SG2 in einen aktiven Zustand versetzt. Nach einer vorgegebenen Zeit erzeugt das Software-Element 21 die Nachricht N2, die die eigentliche Ansteuerungsentscheidung beinhaltet. Das Steuergerät SG2 prüft beim Erhalt der Nachricht N2, ob die Zeit, für die das Steuergerät SG2 im aktiven Zustand verleiben darf, bereits abgelaufen ist oder nicht. Ist sie nicht abgelaufen und die Nachricht N2 beinhaltet die Ansteuerungsentscheidung, dann erfolgt die Ansteuerung der Aktuatorik BA. Anstatt von zwei Nachrichten, können auch drei oder mehrere Nachrichten verwendet werden, die unterschiedliche Phasen der Aktivierung des Steuergeräts SG2 steuern. Die Softwareelemente 20 und 21 laufen als Module auf den Mikrocontroller µC. Sie sind eingebettet in die Gesamtsoftware des Mikrocontrollers µC.

Dies gilt auch für das erfindungsgemäße Ausführungsbeispiel gemäß Figur 3. Das Steuergerät SG1 weist zwei Softwaremodule 30 und 31 auf, die jeweils die erste und zweite Nachricht erzeugen. Hier wird durch das Softwaremodul 30 die Nachricht N1 übertragen, die bereits die Ansteuerungsentscheidung beinhaltet. Das Steuergerät SG2 fordert nunmehr mit einer eigenen Nachricht N3 vom Steuergerät SG1 eine Bestätigung dieser Ansteuerungsentscheidung an. Daraufhin sendet das Softwaremodul 31 eine Bestätigung dieser Ansteuerungsentscheidung an das Steuergerät SG2. Auch hier wird eine Zeit abgewartet zwischen dem Eintreffen der Nachricht N1 und N2, die einen bestimmten vorgegebenen Wert nicht überschreiten darf. Wird dieser Wert überschritten, kommt es zu keiner Ansteuerung. Auch hier könnte diese Methode durch weitere Bestätigungen weiter gesichert werden. Es ist auch möglich, die Ausführungsbeispiele gemäß Figur 2 und Figur 3 miteinander zu kombinieren.

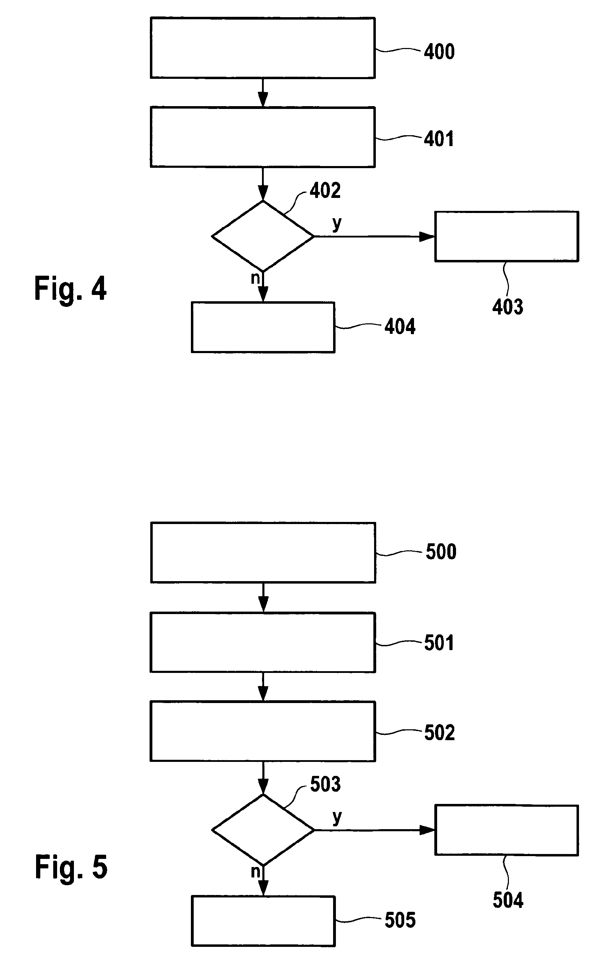

Figur 4 erläutert in einem Flussdiagramm den Ablauf des ersten Ausführungsbeispiels gemäß Figur 2. In Verfahrensschritt 400 liegt eine Ansteuerungsentscheidung, die im Steuergerät SG1 gebildet wurde, für das Steuergerät SG2 vor. In Verfahrensschritt 401 wird daraufhin die Nachricht N1 an das Steuergerät SG2 übertragen mit dem Auftrag, sich in einen aktiven Zustand zu versetzen. In Verfahrensschritt 402 wird geprüft, ob eine zweite Nachricht N2 bis zu einer maximalen Zeitdauer Δt eingetroffen ist. Ist diese Nachricht nicht eingetroffen oder eine andere Nachricht, dann wird weitergesprungen zu Verfahrensschritt 404 und es erfolgt ein Zurücksetzen des Steuergeräts SG2 in einen inaktiven Zustand. Wurde jedoch die Nachricht N2 innerhalb von der Zeit Δt vom Steuergerät SG2 empfangen, erfolgt in Verfahrensschritt 403 die Bremsenansteuerung BA. Alternativ kann wie oben dargestellt die Ansteuerung von anderen Aktuatoren erfolgen.

Figur 5 zeigt in einem weiteren Flussdiagramm den Ablauf des erfindungsgemäßen Verfahrens gemäß des zweiten Ausführungsbeispiels. In Verfahrensschritt 500 wird die Ansteuerungsentscheidung im Steuergerät SG1 in Abhängigkeit von den Sensorsignalen der Crashsensorik CS gebildet. Daraufhin wird in Verfahrensschritt 501 die Nachricht N1 an das Steuergerät SG2 übertragen mit dem Inhalt, dass eine Bremsenansteuerung BA erfolgen soll. Das Steuergerät SG2 sendet daraufhin eine Anforderung N3 an das Steuergerät SG1, die Nachricht N1 zu bestätigen. Dies wird dann in Verfahrensschritt 503 geprüft, ob die Nachricht N2 als Bestätigung innerhalb der Zeit Δt am Steuergerät SG2 eintrifft. Wurde diese Nachricht N2 innerhalb der Zeit Δt am Steuergerät SG2 festgestellt, dann erfolgt in Verfahrensschritt 504 die Ansteuerung der entsprechenden Aktuatorik, hier die Bremsenansteuerung BA. Kam innerhalb der Zeit Δt die Nachricht N2 nicht an oder eine andere Nachricht, dann erfolgt in Verfahrensschritt 505 das Ende des erfindungsgemäßen Verfahrens.

## Patentansprüche

1. Verfahren zur Übertragung einer Ansteuerungsentscheidung für eine Aktuatorik (BA) von einem ersten Steuergerät (SG1) zu mindestens einem zweiten Steuergerät (SG2), wobei die Ansteuerung der Aktuatorik in Abhängigkeit von mindestens zwei Nachrichten vom ersten Steuergerät erfolgt, wobei das erste Steuergerät (SG1) Personenschutzmittel (PS) und das zweite Steuergerät einen Bremsassistenten (BA) ansteuert, dass das erste Steuergerät (SG1) die Ansteuerungsentscheidung für die Personenschutzmittel (PS) zusätzlich über eine Schnittstelle (IF2) vom Mikrocontroller (µC) des ersten Steuergeräts (SG1) zum zweiten Steuergerät (SG2) in einer Form von den wenigstens zwei Nachrichten überträgt, so dass das zweite Steuergerät (SG2) den Bremsassistenten (BA) entsprechend ansteuern kann, **dadurch gekennzeichnet, dass** die Ansteuerung dann erfolgt, wenn das zweite Steuergerät (SG2) mindestens zwei Nachrichten (N1, N2) empfängt, wobei die zweite Nachricht oder zumindest ein Teil der zweiten Nachricht(N2) in Abhängigkeit von einer dritten Nachricht (N3) vom zweiten Steuergerät (SG2) zum ersten Steuergerät (SG1) erzeugt wurde.

2. Verfahren nach Anspruch 1, **dadurch gekennzeichnet, dass** das zweite Steuergerät (SG2) durch die erste Nachricht in einen aktiven Zustand versetzt wird und die zweite Nachricht (N2) die Ansteuerung der Aktuatorik bewirkt, wenn das zweite Steuergerät (SG2) in den aktiven Zustand versetzt wurde.

3. Vorrichtung zur Übertragung von einer Ansteuerungsentscheidung für eine Aktuatorik (BA) von einem ersten zu einem zweiten Steuergerät (SG1, SG2), wobei das zweite Steuergerät (SG2) der Aktuatorik (BA) in Abhängigkeit von mindestens zwei Nachrichten (N1, N2) vom ersten Steuergerät (SGI ansteuert, wobei das erste Steuergerät zur Ansteuerung von Personenschutzmitteln (PS) konfiguriert ist und das zweite Steuergerät zur Ansteuerung eines Bremsassistenten (BA), dass das erste Steuergerät (SG1) die Ansteuerungsentscheidung für die Personenschutzmittel (PS) zusätzlich über eine Schnittstelle (IF2) vom Mikrocontroller (µC) des ersten Steuergeräts (SG1) zum zweiten Steuergerät (SG2) in einer Form von den mindestens zwei Nachrichten überträgt, so dass das zweite Steuergerät (SG2) den Bremsassistenten (BA) entsprechend ansteuern kann, **dadurch gekennzeichnet, dass** die Ansteuerung dann erfolgt, wenn das zweite Steuergerät (SG2) mindestens zwei Nachrichten (N1, N2) empfängt, wobei die zweite Nachricht oder zumindest ein Teil der zweiten Nachricht(N2) in Abhängigkeit von einer dritten Nachricht (N3) vom zweiten Steuergerät (SG2) zum ersten Steuergerät (SG1) erzeugt wurde.

## Claims

1. Method for transmitting an actuation decision for an actuator (BA) from a first controller (SG1) to at least one second controller (SG2), wherein the actuator is actuated as a function of at least two messages from the first controller, wherein the first controller (SG1) actuates personal protection means (PS), and the second controller actuates a brake assistant (BA), wherein the first controller (SG1) additionally transmits the actuation decision for the personal protection means (PS) in a form of the at least two messages from the microcontroller (µC) of the first controller (SG1) to the second controller (SG2) via an interface (IF2), with the result that the second controller (SG2) can correspondingly actuate the brake assistant (BA), **characterized in that** the actuation takes place when the second controller (SG2) receives at least two messages (N1, N2), wherein the second message or at least part of the second message (N2) was generated as a function of a third message (N3) from the second controller (SG2) to the first controller (SG1).

2. Method according to Claim 1, **characterized in that** the second controller (SG2) is placed in an active state by the first message, and the second message (N2) brings about the actuation of the actuator if the second controller (SG2) has been placed in the active state.

3. Device for transmitting an actuation decision for an actuator (BA) from a first controller (SG1) to a second controller (SG2), wherein the second controller (SG2) actuates the actuator (BA) as a function of at least two messages (N1, N2) from the first controller (SG1), wherein the first controller is configured to actuate personal protection means (PS), and the second controller is configured to actuate a brake assistant (BA), wherein the first controller (SG1) additionally transmits the actuation decision, in the form of the at least two messages, for the personal protection means (PS) from the microcontroller (µC) of the first controller (SG1) to the second controller (SG2) via an interface (IF2), with the result that the second controller (SG2) can correspondingly actuate the brake assistant (BA), **characterized in that** the actuation takes place when the second controller (SG2) receives at least two messages (N1, N2), wherein the second message or at least part of the second message (N2) was generated as a function of a third message (N3) from the second controller (SG2) to the first controller (SG1).

## Revendications

1. Procédé de transmission d'une décision d'activation d'un ensemble (BA) d'actionneurs par un premier appareil de commande (SG1) à au moins un deuxième appareil de commande (SG2),
l'activation de l'ensemble d'actionneurs s'effectuant en fonction d'au moins deux messages envoyés par le premier appareil de commande,
le premier appareil de commande (SG1) activant des moyens (PS) de protection des personnes et le deuxième appareil de commande une assistance au freinage (BA),
le premier appareil de commande (SG1) transmettant de plus par une interface (IF2) la décision d'activation des moyens (PS) de protection des personnes depuis le microcontrôleur (µC) du premier appareil de commande (SG1) au deuxième appareil de commande (SG2) sous la forme des deux ou plusieurs messages de telle sorte que le deuxième appareil de commande (SG2) puisse activer de manière appropriée l'assistance au freinage (BA),
**caractérisé en ce que**
l'activation s'effectue lorsque le deuxième appareil de commande (SG2) reçoit au moins deux messages (N1, N2), le deuxième message ou au moins une partie du deuxième message (N2) étant formés en fonction d'un troisième message (N3) envoyé du deuxième appareil de commande (SG2) au premier appareil de commande (SG1).

2. Procédé selon la revendication 1, **caractérisé en ce que** le deuxième appareil de commande (SG2) est placé à l'état actif par le premier message et **en ce que** le deuxième message (N2) a pour effet l'activation de l'ensemble d'actionneurs lorsque le deuxième appareil de commande (SG2) a été placé dans l'état actif.

3. Dispositif de transmission d'une décision d'activation d'un ensemble d'actionneurs (BA) d'un premier à un deuxième appareil de commande (SG1, SG2),
le deuxième appareil de commande (SG2) activant l'ensemble d'actionneurs (BA) en fonction d'au moins deux messages (N1, N2) du premier appareil de commande (SG1),
le premier appareil de commande étant configuré pour activer des moyens (PS) de protection des personnes et le deuxième appareil de commande pour activer une assistance au freinage (BA),
le premier appareil de commande (SG1) transmettant de plus la décision d'activation des moyens (PS) de protection des personnes par l'intermédiaire d'une interface (IF2) depuis le microcontrôleur (µC) du premier appareil de commande (SG1) au deuxième appareil de commande (SG2) sous la forme de deux ou plusieurs messages de telle sorte que le deuxième appareil de commande (SG2) puisse activer de manière appropriée l'assistance au freinage (BA),
**caractérisé en ce que**
l'activation s'effectue lorsque le deuxième appareil de commande (SG2) reçoit au moins deux messages (N1, N2), le deuxième message ou au moins une partie du deuxième message (N2) étant formés en fonction d'un troisième message (N3) envoyé du deuxième appareil de commande (SG2) au premier appareil de commande (SG1).
